# EUROPEAN PATENT APPLICATION

(11) **EP 4 230 287 A1**
(43) Date of publication of application: **23.08.2023**
(21) Application number: 22157090.6
(22) Date of filing: 16.02.2022
(51) Int. Cl.: B01J 8/00, B01J 8/02

(54) **SORPTION-ENHANCED CATALYTIC REACTORS WITH THERMAL MODERATORS**

(71) Applicant: Eidgenössische Materialprüfungs- und Forschungsanstalt, 8600 Dübendorf (CH)
(72) Inventor: KIEFER, Florian, 8048 Zürich (CH); BORGSCHULTE, Andreas, 8600 Dürbendorf (CH); NIKOLIC, Marin, 8038 Zürich (CH); DIMOPOULOS EGGENSCHWILER, Panayotis, 8602 Wangen (CH); BACH, Christian, 8602 Wangen (CH)
(74) Representative: Keller Schneider Patent- und Markenanwälte AG

(57) **Abstract**

A heterogeneous catalytic reactor (1) for carrying out sorption-enhanced reactions, especially for carrying out sorption-enhanced CO and/or CO2 hydrogenation reactions, in particular for carrying out sorption-enhanced methanation reactions, comprises a housing (2) with at least one inlet (3) for introducing one or more reactants into a reaction volume, and at least one outlet (4) for discharging one or more products from the reaction volume, whereby the reaction volume comprises a catalyst bed (5) with a catalyst, especially a hydrogenation catalyst, and a sorbent (6) for adsorbing at least one or more reaction products, especially water, characterized in that the catalyst bed (5) furthermore comprises an integrated thermal moderator (7) to absorb, store and/or release heat during operation of the reactor (1), whereby the thermal moderator (7) is chemically and/or physically different from the catalyst and the sorbent (6).

## Description

### Technical Field

The invention relates to a heterogeneous catalytic reactor for carrying out sorption-enhanced reactions, especially for carrying out sorption-enhanced CO and/or CO₂ hydrogenation reactions, in particular for carrying out sorption-enhanced methanation reactions. Furthermore, the invention is directed to a method for operating a heterogeneous catalytic reactor as well as a specific use of a thermal moderator in a heterogeneous catalytic reactor.

### Background Art

Catalytic processes are widely used in chemical engineering for producing various chemical products in an economic and efficient manner. For example, to be usable in practice, hydrogenation of chemical compounds usually requires catalysts because non-catalytic hydrogenation takes place only at very high temperatures.

For different chemical processes, there are different process designs and catalytic reactors, which are adapted to specific requirements. For example, for catalytic processes in which the yield is determined by equilibrium thermodynamics, so-called sorption enhanced reaction processes performed in heterogeneous catalytic reactors are known (Borgschulte et al. 2016, Phys Chem Chem Phys 18, 17217-17223). These processes are based on the principle that at least one reaction product is adsorbed, e.g., by a sorbent in the catalyst bed. If this product, e.g. water, is actively removed, the chemical equilibrium of the reaction shifts towards the product side, resulting in higher effective yield.

Typical sorption enhanced reactions include dehydrogenation reactions (with hydrogen adsorbed), oxidation of CO to CO₂ (with CO₂ adsorbed), reversed water gas shift reactions (with CO₂ adsorbed), CO₂ hydrogenation reactions such as CO₂ methanation and CO₂ hydrogenation to methanol (with water and/or methanol adsorbed).

However, adsorption processes usually release heat, which can be, especially in the case of methanation reactions, additional to the heat of reaction. The total heat release influences the sorption behavior of the catalyst bed and therefore influences the product yield per catalyst mass and cycle. Specifically for sorption enhanced methanation, the interplay between temperature dependent sorption capacity and temperature development due to local water (i.e. adsorbate) production and adsorption results in a combined sorption and reaction front running through the reactor. The higher the temperature, the faster the reaction front propagation and therefore the lower the product yield per catalyst mass and cycle. If the reaction takes place in an adiabatic reactor, temperatures rapidly increase, leading to low product yields per catalyst bed mass. Thus, temperatures must be carefully controlled when performing sorption-enhanced reaction processes, e.g. by heat removal during the catalytic process. For sorption-enhanced methanation using nickel catalysts, for example, optimum temperatures for the reaction lie at around 300°C (Borgschulte et al. 2016, Phys Chem Chem Phys 18, 17217-17223).

Once the maximum sorption capacity of the sorbent in the reactor is reached, the sorption-enhanced reaction process needs to be interrupted or stopped and the catalytic reactor has to be regenerated by desorbing the adsorbate from the catalyst bed in order to prepare the reactor for another reaction cycle. For regeneration, heat must be supplied to enable an efficient desorption process, although the driving force might be established by reducing the gas side partial adsorbate (e.g. H₂O) pressure as well.

The catalyst bed for sorption-enhanced reactions generally contains a sorbent, e.g. zeolite, and the catalyst. Both can be present in pelletized form, as powders, or as coatings on structures, pellets, surfaces or other supports. Alternatively, the combination of sorbent and catalyst can be used in form of a combined sorbent and catalyst material, which means that the catalyst particles are embedded in the sorbent matrix, what can e.g. be achieved through impregnation. Although currently known reactors allow for performing sorption-enhanced reaction processes, thermal management, i.e. heat removal or supply during catalytic reaction and heat supply or removal during regeneration, is a highly sophisticated task.

There is thus a need to develop new and improved methods and devices for performing sorption-enhanced reaction processes, which at least partly overcome the aforementioned drawbacks.

### Summary of the invention

It is the object of the present invention to provide improved solutions for carrying out sorption-enhanced reactions, especially for carrying out sorption-enhanced CO and/or CO₂ hydrogenation reactions, in particular for carrying out sorption-enhanced methanation reactions. In particular, the solutions should allow for obtaining high quality products with high yield, preferably without need of complex process control and equipment.

Surprisingly it was found that these objects can be achieved with a heterogeneous catalytic reactor according to claim 1, the method of independent claim 9 and the use of independent claim 14.

According to a first aspect, the invention is concerned with a heterogeneous catalytic reactor for carrying out sorption-enhanced reactions, especially for carrying out sorption-enhanced CO and/or CO₂ hydrogenation reactions, in particular for carrying out sorption-enhanced methanation reactions, the reactor comprising a housing with at least one inlet for introducing one or more reactants into a reaction volume, and at least one outlet for discharging one or more products from the reaction volume, whereby the reaction volume comprises a catalyst bed with a catalyst, especially a hydrogenation catalyst, and a sorbent for adsorbing at least one or more reaction products, whereby the catalyst bed furthermore comprises an integrated and/or embedded thermal moderator to absorb, store and/or release heat during operation of the reactor, whereby the thermal moderator is chemically and/or physically different from the catalyst and the sorbent.

In a special embodiment, the heterogeneous catalytic reactor is a reactor for carrying out sorption-enhanced hydrogenation reactions, especially for carrying out sorption-enhanced CO and/or CO₂ hydrogenation reactions, in particular for carrying out sorption-enhanced methanation reactions, producing water as a by-product, whereby the catalyst is a hydrogenation catalyst and the sorbent is a sorbent for water. In this case, one of the at least one or more reaction products that is adsorbed by the sorbent is water.

Thus, it is a core of the present invention to integrate and/or embed within the catalyst bed an additional material, i.e. a thermal moderator that is configured for absorbing, storing and/or releasing heat during operation of the reactor. In the case of sorption-enhanced methanation or similar exothermic reactions, this allows for absorbing reaction heat and/or adsorption heat released during the phase in which the catalytic reaction takes place, i.e. the reaction phase, and storing it in the thermal moderator. After the reaction phase, the heat stored in the thermal moderator can be released in the regeneration phase for desorbing the water adsorbed on the sorbent. In contrast to existing solutions, a significant proportion of the reaction and adsorption heat is kept within the catalyst bed. Thus, heat removal from the catalyst bed, which is often a challenging task, can be reduced. At the same time, the heat stored in the thermal moderator can be used to support desorption of the adsorbate, e.g. water, in the regeneration phase. Therefore, heat transfer from the catalyst bed to external regions, e.g. the reactor housing, and heat transfer from the external regions to the catalyst bed, can be significantly reduced.

This is in particular advantageous if heat release and heat uptake requirements are alternating in relatively short periods. Since the thermal moderator is located inside the catalyst bed with direct contact to the fluids flowing through the catalyst bed and/or the catalyst and/or the sorbent and/or a combined catalyst sorbent material, heat transfer to/from the thermal moderator from/to the fluids is more efficient than via any heat exchanging surfaces. Put differently, thanks to the thermal moderator, heat transfer is faster and more efficient without need for elaborate equipment and process control.

Furthermore, the thermal moderator helps to achieve a more constant heat distribution within the catalyst bed and the moderation of the temperature positively influences the product quality. Especially, undesired heat hotspots or temperature fluctuations can be significantly reduced.

Although the embedded thermal moderator material requires a certain volume within the catalyst bed, which otherwise could be filled with additional catalyst, under relevant operation conditions, the product yield per catalyst mass can be higher than without the thermal moderator. Inter alia, this is because the temperature in the catalyst bed during exothermic catalytic reactions can be reduced what is beneficial for the exothermic adsorption process of water by the sorbent. In the case of endothermic reactions or process steps, heat is released from the moderator, which again leads to a faster reaction and/or desorption with a positive influence on the conversion yield and/or process efficiency.

Put differently, for exothermic sorption-enhanced reactions, such as e.g. methanation reactions, the thermal moderator allows for temporarily storing heat inside the catalyst bed which optimizes the product yield per catalyst mass and the product quality (compared to the adiabatic case) while the stored heat can be released during the catalyst bed regeneration in a direct an efficient manner.

Preferably, the thermal moderator has a high heat capacity. The heat capacity is meant to be the specific volumetric heat capacity (symbol C; unit: J/(m³·K)) of a substance, i.e. the heat capacity of a sample of the substance divided by the volume of the sample.

The thermal moderator in particular is chemically inert with regard to the reactions performed, especially with regard to sorption-enhanced CO and/or CO₂ hydrogenation reactions, in particular with regard to sorption-enhanced hydrogenation reactions.

An adsorption capacity of the thermal moderator towards the at least or more reaction products to be adsorbed by the sorbent, especially towards water, is in particular smaller than the adsorption capacity of the sorbent towards the at least or more reaction product, especially water. In particular, the adsorption capacity of the thermal moderator is at least 100 times, preferably at least 1'000 times or 10'000 times smaller than adsorption capacity of the sorbent. The adsorption capacity is the amount of adsorbate, e.g. water, taken up by the sorbent per unit mass of the sorbent, e.g. in g/g, under standard conditions (p = 1 atm; T = 25°C).

The catalyst, especially the hydrogenation catalyst, preferably is a metal selected from Fe, Co, Ni, Cu, Ru, Rh, Pd, Ag, Re, Os, Ir, Pt, Ti, Au and/or V. Especially preferred is Ni and/or Ru, in particular Ni. This is in particular true if the reactor is used for methanation reactions. Especially, the catalyst is present on a support, for example on Al₂O₃, SiO₃, TiO₂, CeO₂ and/or ZrO₂ particles.

According to a preferred embodiment, the catalyst is present in the form of particles, especially with a size of 0.5 - 5 mm. In the present context, the particle size is meant to be the length of a particle measured along the longest extension. However, it is also possible to provide the catalyst in the form of a coating on another component in the catalyst bed, an impregnation of another component in the catalyst bed and/or embedded in another component in the catalyst bed, whereby the other component is for example the sorbent and/or the moderator.

Especially, the sorbent is present in the form of particles, preferably with a particle size of 0.5 - 5 mm.

The sorbent, for example, is a microporous material, especially a zeolite and/or a metal-organic framework material, preferably a zeolite or CaO. Microporous materials typically have a pore size of less than 2 nm. Zeolites are microporous aluminosilicate minerals. Preferably, the zeolite has an average pore size of 0.3 - 1.0 nm, for example, 0.3 nm, 0.4 nm, 0.5 nm and/or 1.0 nm. For example the zeolite is a zeolite of type 3A, 4A, 5A, 10X and/or13X.

Zeolites are especially preferred for adsorption of water whereas CaO is suitable for adsorption of CO₂.

Especially, the catalyst and the sorbent are present in the form of a combined catalyst sorbent material. According to a preferred embodiment, the catalyst particles are embedded in a matrix of the sorbent particles. In this way, catalyst and sorbent are uniformly distributed in the catalyst bed. Thereby, preferably, the overall particle size of the combined catalyst sorbent material is from 0.5 - 5 mm.

In the combined catalyst sorbent material, the sorbent part of the material as well as the catalyst part of the combined catalyst sorbent material can be chosen as described above.

For example, the catalyst is embedded in the sorbent matrix as catalyst particles, especially nano-particles, homogeneously distributed in the sorbent matrix. Especially, the catalyst is present in form of a Ni particles, especially Ni nano-particles, embedded in a sorbent selected from zeolites.

Nano-particles are in particular meant to be particles with a size of 1 - 100 nm in diameter, especially in the size range of 20 to 50 nm.

Preferably, the thermal moderator has a volume specific heat capacity that is at least 10%, in particular at least 20%, especially at least 30%, higher than the volume heat capacity of the catalyst.

Likewise preferred, the thermal moderator has a volume specific heat capacity that is at least 50%, in particular at least 75%, especially at least 100%, of the volume specific heat capacity of the sorbent.

Thermal moderators with such heat capacities are highly beneficial because they can store a relatively high proportion of the heat released or adsorbed during the catalytic reaction and the adsorption of the at least one or more products.

Especially, the thermal moderator is selected from AI, Cu, Fe, alloys of Fe with Cr, Ni and/or Mo, and/or from phase change materials. Especially the phase change material is an encapsulated phase-change material, in particular a salt. In this case, the phase change of the material preferably is from solid to liquid or from liquid to gaseous, and vice versa. According to another preferred embodiment, the phase change material features a phase change from solid to solid. In this case, no encapsulation is required.

A phase change material (PCM) is a substance which releases/absorbs energy at a phase transition to provide useful heat/cooling. Generally, the transition will be from one of the first two fundamental states of matter - solid and liquid - to the other. In the present case, in particular for sorption enhanced methanation reactions, a melting point of the phase change material preferably is in the range of 200 - 400°C, especially 260 - 350°.

According to a highly preferred embodiment, the thermal moderator is selected from AI. Al is chemically inert with regard to typical hydrogenation reactions, e.g. methanation, and has a rather high heat capacity. Furthermore, Al is thermally as well as mechanically stable within the desired temperature range. However, depending on the requirements and the specific reaction, other materials might be suitable as well.

Especially, the thermal moderator is present in the form of particles, such as e.g. pellets, plates, rods and/or as catalyst support. Especially the particles have a size of 0.5 - 5 mm. In this case, the thermal moderator can easily be embedded in the catalyst bed by intermixing with the catalyst and/or the sorbent.

Especially, thermal moderator particles are embedded in a matrix of the sorbent particles and/or the catalyst particles and/or the combined catalyst sorbent material.

Thereby, most preferably, the catalyst is present in the form of particles, in particular nano-particles, embedded in sorbent particles, especially in the form of Ni nano-particles embedded in a zeolite sorbent matrix. Further preferred in this case, the thermal moderator is AI.

In another preferred embodiment, the thermal moderator is configured as catalyst support, e.g. as the core part of a core-shell-structure. For example, the catalyst is present as a coating on the thermal moderator. Thereby, in particular for methanation recations, the thermal moderator is selected from Al with a Ni coating serving as the catalyst.

Thus, in particular, the catalyst, the sorbent and the moderator can be present as follows: (i) the catalyst and the sorbent are present in the form of a combined catalyst sorbent material, e.g. Ni impregnated zeolithe, and a separate moderator; (ii) moderator particles are comprised in a matrix of the combined catalyst sorbent material; or (iii) a combined catalyst sorbent material is present as a coating on the moderator.

Especially, at least in sections of the catalyst bed, for example throughout the whole catalyst bed, the thermal moderator particles are homogeneously distributed within the sorbent particles and/or the catalyst particles.

In particular, a proportion of the thermal moderator is 1 - 75 vol.%, especially 2 - 60 vol.%, in particular 5 - 35 vol.% or 35 - 60 vol.%, with respect to the total volume of the catalyst bed. With these proportions, the above-described advantages are particularly effective.

Particularly, at least 90 vol.%, especially at least 95 vol.%, of the thermal moderator is not in physical contact with elements of the reactor outside the catalyst bed and/or the housing of the reactor. This allows for effectively decoupling the moderator and/or isolating the thermal moderator inside the catalyst bed in order to avoid heat transfer from and to the catalyst support as effective as possible.

In a special embodiment, in a direction from the inlet to the outlet, the proportion of the thermal moderator changes, especially decreases, at least once, for example in a step-like and/or continuously manner. With such a configuration, the reactor can further be optimized with regard to the specific design and operation conditions of the reactor.

For example, in a first section of the catalyst bed, the proportion of the thermal moderator is different, especially higher, than the proportion of the thermal moderator in a second section or a further section of the catalyst bed and/or whereby a proportion of the thermal moderator at least in one section of the catalyst bed continuously increases or decreases to form a gradient. In particular, the first section is arranged closer to the at least one inlet and the second section or the at least one further section is arranged closer to the at least one outlet.

In particular, a ratio of the proportion of the thermal moderator in the first section to the proportion of the thermal moderator in the second section is from 10:1 - 1.1:1, especially 5:1 - 1.2:1 or 2:1 - 1.5:1.

Especially, in the first section the proportion is for example 40 - 60 vol.% and in the second section, the proportion is 20 - 35 vol.%, with respect to the total volume of the catalyst bed. Such configurations turned out to be highly beneficial, if for example, the reactor is mounted vertically or with the at least one inlet lower than the at least one outlet. Thus, in an especially preferred embodiment, the reactor is mounted vertically or with the at least one inlet lower than the at least one outlet, respectively.

The housing of the reactor for example comprises a cylindrical tube, especially a circular cylindrical tube, which is closed at the tube end faces, and whereby the inner volume of the cylindrical tube defines the reaction volume. The at least one inlet and the at least one outlet are for example located in the closed end faces of the tube. Especially, the tube is oriented such that its longitudinal axis runs in vertical direction.

In particular, the housing, especially the tube, comprises at least one heating and/or cooling line, which is configured for heating and/or cooling the reactor with a heating and/or cooling fluid. For example, the housing is s a double-walled housing, which is configured for conduction a heating and/or cooling fluid in between the two walls of the housing.

In particular, the reactor comprises a heating element for heating the reactor to a desired temperature. The desired temperature depends on the reaction to be performed. Especially, for methanation reactions, the desired temperature preferably is at least 250°C or at least 300°C. For example, the heating element is a resistive heater.

A further aspect of the present invention is directed to a method for operating, especially for cyclically operating, a heterogeneous catalytic reactor as described above, comprising the steps of:
a) Feeding at least two reactants, in particular hydrogen and a further gaseous reactant, especially hydrogen and CO₂ and/or CO, through the at least one inlet into the reaction volume and passing the reactants to be reacted through the catalyst bed;
b) While passing the at least two reactants through the catalyst bed, reacting the reactants for producing at least a first product, especially methane, and at least a second product, especially water, whereby the at least one second product is at least partially adsorbed by the sorbent and reaction heat of the reaction and/or adsorption heat of the second product adsorption is at least partially absorbed by the thermal moderator;
c) Discharging the first product, especially methane, from the reaction volume through the at least one outlet.

Thereby, in particular, steps a) - c) are carried out simultaneously.

In a special embodiment, the at least two reactants comprise or consist of hydrogen and a further gaseous reactant to be hydrogenated, especially a reactant comprising CO and/or CO₂. In this case, the further gaseous reactant is hydrogenated and the first product is a hydrogenated product, in particular methane, and the second product is water.

This allows for effectively obtaining products, e.g. hydrogenated products, with reactors as described above. Steps a) - c) are referred to as reactive phase.

Advantages described above in connection with the reactor are likewise given in connection with the inventive method. In particular, for performing the inventive method, the inventive reactor is configured with one or more of the above-described optional features.

In a further preferred implementation, the method furthermore comprises the steps of:
d) Stopping the feeding of the at least two reactants, especially at a time when the sorbent is essentially saturated with adsorbed product and/or when a predetermined level of at least one reactant can be detected at the at least one outlet and/or when a reaction front of the reaction is detected, e.g. via temperature measurement, to be at a predetermined position, e.g. at or close to the at least one outlet;
e) Regenerating the sorbent, in particular by flushing the catalyst bed with a drying gas, whereby the adsorbed product is desorbed from the sorbent and desorption heat required for desorbing the adsorbed product is at least partly provided by heat absorbed in the thermal moderator;
f) Discharging the desorbed product through the at least one outlet;
whereby, in particular, steps e) - f) are carried out until the sorbent reaches a predefined adsorbate content and/or is essentially dry.

In combination with the moderator, this allows for a highly efficient regeneration of the reactor after steps a) - c) or the reactive phase, respectively. Steps e) - f) are referred to as regeneration phase.

Regeneration in step e) is for example effected by flushing the catalyst bed with a gas, especially a drying gas, by depressurization and/or by a temperature increase of the catalyst bed. Several of these measures methods can be combined. The general aim is to reduce the partial pressure of the adsorbed specie(s) in the gas phase and/or to increase of the equilibrium adsorbate pressure, e.g. through temperature increase. Then the species desorbed from the reactor can be removed through flush and/or vacuum.

The concentration of at least one of the reactants can e.g. be detected with a gas infrared spectrometer, gas chromatography, a mass spectrometer, through thermal conductivity measurement and the like. When using a gas infrared spectrometer, the absorption or transmission at a wavelength characteristic for the reactant can for example be measured over time. An increase in the absorption signal or a decrease in transmission signal indicates that the catalytic reaction, due to the saturation of the sorbent, no longer proceeds with the initial efficiency.

Especially, regeneration of the sorbent can be supported by flushing the catalyst bed with a drying gas. The drying gas is an inert gas, which is not reactive with the components of the catalyst bed under the given conditions. For example, the drying gas can be selected from a reactant or product, that is not the adsorbed species or an inert gas such as N₂ and/or noble gases, or air.

In particular, steps a) - c) of are performed alternatingly with steps d) - f). Put differently, in this manner reactive phases and regeneration phases are performed alternatingly and/or in repeated cycles.

According to a highly preferred implementation, the reactants in step a) comprise hydrogen, CO₂, CO, methane, or a mixture of two or more of these substances.

The inventive method is in particular suitable for methanation reactions, i.e. the production of methane from CO and/or CO₂ and H₂. Depending on the source of the CO₂, the CO₂ can be provided in pure form or in the form of a mixture with other components, e.g. with CO and/or methane.

In particular, step b) takes places at a temperature of 200 - 550°C, especially 250 - 500°C. Thereby, preferably, the initial temperature at the start of the catalytic reaction is in the range of 200 - 350°C, especially 250 - 330°C. A temperature at the end of the catalytic reaction preferably is in the range of 250 - 550°C, especially 280 - 400°C.

In particular, step b) takes places at a pressure of 1 - 100 bar, especially 1 - 20 bar.

These conditions are especially suitable for methanation reactions.

According to a further special implementation, the at least one of the at least two reactants originates from another methanation process, e.g. a non-sorption enhanced methanation process and/or a biological methanation process and/or a fermentation process. In such processes, beside methane, the products obtained usually comprise proportions of unreacted CO₂, H₂ and/or other side-products. Therefore, further subjecting the products of non-sorption enhanced methanation processes to the inventive methanation process will greatly increase the yield and quality of the desired main product, i.e. methane.

Thus, according to this further special implementation, the inventive method further comprises a step of performing another methanation process, in particular a non-sorption enhanced methanation process, and/or a biological methanation process and/or a fermentation process before performing steps a) - c) of the inventive method and supplying the products of the other process as reactants in step a). Thereby, in particular, the products of the other process comprises methane as well as CO₂ and/or H₂.

A further aspect of the present invention is related to the use of a thermal moderator in a heterogeneous catalytic reactor as described above.

Advantages described above in connection with the inventive reactor and the inventive methods are likewise given with the inventive use. In particular, for the inventive use, the inventive reactor is configured with one or more of the above-described optional features and operated as described in connection with the inventive method.

Especially, the thermal moderator is used to absorb, store and/or release heat during operation of the reactor.

In particular, the thermal moderator is used for absorbing and storing heat within the catalyst bed when carrying out catalytic reactions, especially sorption-enhanced hydrogenation reactions. Especially, this use takes place during steps a) - c) of the method as described above.

Especially preferred, the thermal moderator is used for releasing heat to desorb water from the sorbent during regeneration of the reactor. In particular, this use takes place during steps d) - f) of the method as described above.

Further preferred, the thermal moderator is used to balance a heat distribution in the catalyst bed when carrying out catalytic reactions, especially sorption-enhanced hydrogenation reactions. Especially, this uses takes place during steps a) - c) of the method as described above.

According to another beneficial implementation, the thermal moderator is used for increasing the product yield and/or for increasing the lifetime of the reactor.

Especially, the thermal moderator is used for more than one, in particular for all of the above described uses in combination.

Other advantageous embodiments and combinations of features come out from the detailed description below and the entirety of the claims.

### Brief description of the drawings

The drawings used to explain the embodiments show:
- Fig. 1: A schematic cross-section of an inventive reactor along its longitudinal axis;
- Fig. 2: A flow chart of an inventive operation method of the reactor of Fig. 1.

In the figures, the same components are given the same reference symbols.°

### Examples

### Heterogeneous catalytic reactor

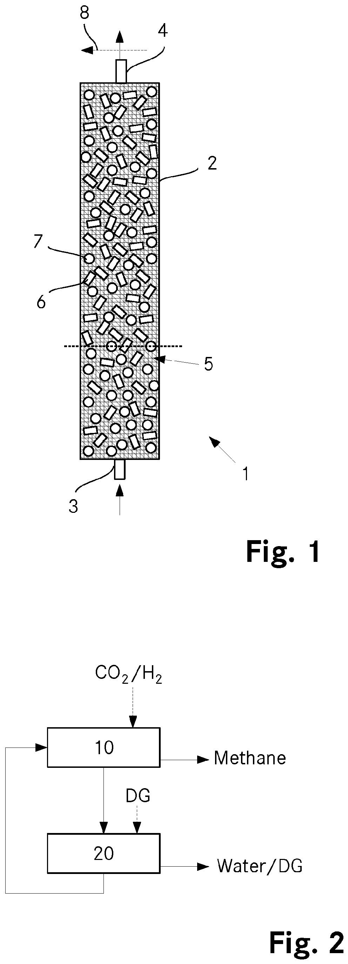

Fig. 1 shows a schematic cross-section of an inventive reactor 1 along its longitudinal axis. The reactor 1 comprises a housing 2 in the form of a closed hollow cylindrical tube (e.g. made of stainless steel) with an inlet 3 at the lower end and an outlet 4 at the upper end. The reactor 1 can be heated with a heating device (not shown) and/or by bringing the reactor in contact with a hot fluid, e.g. a hot gas.

The inside of the housing 2 forms the reaction volume of the reactor 1, which is completely filled with a catalyst bed 5. The catalyst bed 5 consists of thermal moderator particles 7 (e.g. Al particles with a diameter of 2 mm) and sorbent particles 6 (e.g. cylindrical pellets of 13X zeolites with a diameter of 1 mm and a length of 3 mm), which are impregnated with a catalyst (e.g. Ni). The thermal moderator particles 7 are embedded within the catalyst bed 5. Thereby, most of the thermal moderator particles 7 do not have physical contact with the housing 2 of the reactor.

In the lower quarter of the reactor 1 (the part below the dashed line in Fig. 1), the proportion of thermal moderator particles 7 is higher (e.g. 50 vol.%) than in the upper three quarters (the part above the dashed line in Fig. 1; e.g. 30 vol.%).

The inlet 3 is configured to supply gaseous reactants (e.g. CO₂) and H₂, which can pass through the catalyst bed 5 where a catalytic hydrogenation reaction takes place during operation of the reactor, i.e. during the reaction phase. Thereby, water formed as a side-product of the catalytic reaction can be adsorbed on the sorbent particles 6. Products (e.g. methane) formed within the catalyst bed 5 can be discharged from the inside via outlet 4 and characterized by a gas infrared spectrometer 8, which is for example configured for measuring absorption and/or transmission of characteristic wavelengths of the products and/or reactants used. Instead of a gas infrared spectrometer, gas chromatography, a mass spectrometer, or thermal conductivity measurement and the like can be used.

### Operating method

Fig. 2 shows a flow chart of a method for operating the reactor 1 of Fig. 1 for producing methane in a methanation reaction. In step 10, the reactor is heated to temperature of for example 300°C and then H₂ and CO₂ (gaseous reactants) are fed into the reaction volume through the inlet 3. While H₂ and CO₂ passes the catalyst bed 5, CO₂ is hydrogenated at the Ni catalyst (integrated in the sorbent particles), whereby methane and water are formed as reaction products. The so formed water is adsorbed in the sorbent particles 6, whereas methane is discharged from the reaction volume via outlet 4. Reaction heat as well as adsorption heat generated during the catalytic reaction is at least partly absorbed by the thermal moderator.

During operation of the reactor in step 10, the gas leaving the reactor volume via outlet 4 is continuously measured with the gas infrared spectrometer 8 (or any other technique mentioned above). As long as the sorbent particles 6 still have adsorption capacity, there is almost only methane and no CO₂ leaving the reactor. However, there is a reaction front running through the reactor form the inlet 3 to the outlet 4 lower end to the upper end. With reaching water saturation of all sorbent particles 6, when the reaction front reaches the upper end of the catalyst bed 5, unreacted CO₂ is suddenly released through the outlet 4.

At this point, feeding of H₂ and CO₂ is stopped in step 20 and the catalyst bed is flushed with a drying gas DG for desorbing the water from the sorbent particles 6 and taking up the water in the drying gas and discharging the desorbed water together with the DG through outlet 4. Thereby, desorption heat required for desorbing the water is at least partly provided by heat absorbed in the thermal moderator particles 7.

Once the sorbent particles 6 are dry, i.e. when the water reaches a desired level at the outlet 4 (detectable by the infrared spectrometer 8), step 10 can be repeated for producing further methane.

### Tests

A reactor as shown in Fig. 1 was operated at three different temperature levels (starting temperatures: 280°C, 300°C and 320°C) at a constant CO₂ flux of 0.1 mol/m²/s. The catalyst bed in the lower quarter consisted of 50 vol.% Al particles (thermal moderator) and 50 vol.% of 13X zeolite impregnated with Ni (sorbent and catalyst). In the upper three quarters of the reactor, the catalyst bed consisted of 30 vol.% of the same Al particles and 70 vol.% of the same 13X zeolite particles coated with Ni as in the lower quarter. This configuration is referred to as "Configuration M".

For reasons of comparison, the same reactor was prepared with a catalyst bed consisting of 100 vol.% of the same 13X zeolite particles impregnated with Ni as used in the other experiments. Thus, in the latter case, the catalyst bed did not comprise any thermal moderators. This configuration is referred to as "Configuration R".

In order to investigate the performance of the reactor under the different conditions, the maximum temperatures inside the reactor at different positions (25 mm and 75 mm from the inlet) and the duration of the sorption-enhanced reaction time (= time to reach full saturation in the catalyst bed) were measured. Table 1 gives an overview of the results obtained.

**Table 1**

| **Exp.** | **Configuration** | **Tₛₜₐᵣₜ [°C]** | **Tₘₐₓ, ₂₅ mm [°C]** | **T**_{max,} **_{75 mm} [°C]** | **Reaction time [min]** |
|---|---|---|---|---|---|
| **E1** | R | 280 | 450 | 375 | 14.1 |
| **E2** | M | 280 | 390 | 340 | 11.1 |
| **E3** | R | 300 | 465 | 380 | 12.5 |
| **E4** | M | 300 | 405 | 355 | 9.8 |
| **E5** | R | 320 | 475 | 395 | 11.8 |
| **E6** | M | 320 | 420 | 370 | 8.5 |

As evident from table 1, addition of the thermal moderator (cf. experiments E2, E4 and E6) significantly reduces the maximum temperature when compared with the comparative experiments without thermal moderators (experiments E1, E3 and E5). This greatly improves the sorption capacity of the sorbent particles. Although the "dilution" of the catalyst bed with the thermal moderator particles in experiments E2, E2 and E6 is as high as 30% to 50%, the reaction time decreases only slightly by 20 - 25%. Therefore, the loss of catalyst volume in the catalyst bed due to the addition of the thermal moderator is disproportional to the gain in sorption capacity.

From these findings, it is evident that the product yield per catalyst mass with thermal moderator is higher than without thermal moderator.

Furthermore, calculations revealed that by adjusting the proportion of thermal moderator in the range of 5 - 25 vol.% of the total catalyst bed volume, increased reaction times can be expected, compared to a case without thermal moderator. This means the capacity of the sorption catalyst is increased, although the catalyst mass is reduced.

It will be appreciated by those skilled in the art that the present invention can be embodied in other specific forms without departing from the spirit or essential characteristics thereof. The presently disclosed examples are therefore considered in all respects to be illustrative and not restricting.

## Claims

1. Heterogeneous catalytic reactor (1) for carrying out sorption-enhanced reactions, especially for carrying out sorption-enhanced CO and/or CO₂ hydrogenation reactions, in particular for carrying out sorption-enhanced methanation reactions, the reactor comprising a housing (2) with at least one inlet (3) for introducing one or more reactants into a reaction volume, and at least one outlet (4) for discharging one or more products from the reaction volume, whereby the reaction volume comprises a catalyst bed (5) with a catalyst, especially a hydrogenation catalyst, and a sorbent (6) for adsorbing at least one or more reaction products, especially water, **characterized in that** the catalyst bed (5) furthermore comprises an integrated thermal moderator (7) to absorb, store and/or release heat during operation of the reactor (1), whereby the thermal moderator (7) is chemically and/or physically different from the catalyst and the sorbent (6).

2. Heterogeneous catalytic reactor according to claim 1, whereby the sorbent (7) is a microporous material, especially a zeolite and/or a metal-organic framework material, which is present in the form of particles, especially with a size of 0.5 - 5 mm.

3. Heterogeneous catalytic reactor according to any of claims 1 - 2, whereby the catalyst and the sorbent are present as a combined sorbent and catalyst material, in which the catalyst is a metal selected from Fe, Co, Ni, Cu, Ru, Rh, Pd, Ag, Re, Os, Ir, Pt, Ti, Au and/or V, in particular in the form of Ni particles, especially Ni nano-particles, embedded in zeolite particles.

4. Heterogeneous catalytic reactor according to any of claims 1 - 3, whereby the thermal moderator (7) has a volumetric specific heat capacity that is at least 10%, in particular at least 20%, especially at least 30%, higher than the volumetric specific heat capacity of the catalyst and/or the thermal moderator (7) has a volumetric specific heat capacity that is at least 50%, in particular at least 75%, especially at least 100%, of the volumetric specific heat capacity of the sorbent (6).

5. Heterogeneous catalytic reactor according to any of claims 1 - 4, whereby the thermal moderator (7) is present in the form of particles, such as e.g. pellets, plates, rods and/or as catalyst support, especially the particles have a size of 0.5 - 5 mm, and whereby the thermal moderator (7) is selected from AI, Cu, Fe, alloys of Fe with Cr, Ni and/or Mo, and/or from phase change materials, especially an encapsulated phase-change material, in particular a salt.

6. Heterogeneous catalytic reactor according to any of claims 1 - 5, whereby a proportion of the thermal moderator (7) is 1 - 75 vol.%, especially 2 - 60 vol.%, in particular 5 - 35 vol.% or 35 - 60 vol.%, with respect to the total volume of the catalyst bed.

7. Heterogeneous catalytic reactor according to any of claims 1 - 6, whereby at least 90 vol.%, especially at least 95 vol.%, of the thermal moderator (7) is not in physical contact with elements of the reactor (1) outside the catalyst bed (5) and/or the housing (2) of the reactor (1).

8. Heterogeneous catalytic reactor according to any of claims 1 - 7, whereby in a first section of the catalyst bed, the proportion of the thermal moderator (7) is different, especially higher, than the proportion of the thermal moderator (7) in a second section or in a further section of the catalyst bed and/or whereby a proportion of the thermal moderator at least in one section of the catalyst bed continuously increases or decreases to form a gradient.

9. Method for operating a heterogeneous catalytic reactor according to any of claims 1 - 8 comprising the steps of:
a) Feeding at least two reactants, in particular hydrogen and a further gaseous reactant, especially hydrogen and CO₂ and/or CO, through the at least one inlet (3) into the reaction volume and passing the reactants through the catalyst bed (5);
b) While passing the at least two reactants through the catalyst bed, reacting the reactants for producing at least a first product, especially methane, whereby at least one product, especially water, is adsorbed by the sorbent (6) and reaction heat of the reaction and/or adsorption heat is at least partially absorbed by the thermal moderator (7);
c) Discharging the first product form the reaction volume through the at least one outlet (4).

10. Method according to claim 9, further comprising the steps of:
d) Stopping the feeding of at least one reactant, especially at a time when the sorbent (6) is saturated with adsorbed product and/or when a predetermined concentration of the at least one reactant is detected at the at least one outlet (4) and/or when a reaction front of the reaction is detected, e.g. via temperature measurement, to be at a predetermined position, e.g. at or close to the at least one outlet;
e) Regenerating, the sorbent (6), in particular by flushing the catalyst bed (5) with a drying gas, whereby the at least one product is desorbed from the sorbent and desorption heat required for desorbing the adsorbed at least one product is at least partly provided by heat absorbed in the thermal moderator (7);
f) Discharging the desorbed at least one product through the at least one outlet (4); whereby, in particular, steps e) - f) are carried out until the sorbent (6) reaches a predefined adsorbate content.

11. Method according to claim 10, whereby the steps a) - c) of claim 9 are performed alternatingly with steps d) - f) of claim 10, especially in repeated cycles.

12. Method according to any of claims 9 - 11, whereby step b) takes places at a temperature of 200 - 550°C, especially 250 - 500°C and/or at a pressure of 1 - 40 bar, especially 1 - 20 bar.

13. Method according to any of claims 9 - 12, whereby the gaseous reactants in step a) comprise CO₂, CO, methane, or a mixture of two or more of these substances.

14. Use of a thermal moderator (7) in a heterogeneous catalytic reactor (1) according to any of claims 1 - 8, whereby the thermal moderator (7) is used to absorb, store and/or release heat during operation of the reactor.

15. Use according to claim 14, whereby the thermal moderator (7) is used for absorbing and storing heat within the catalyst bed (5) when carrying out sorption-enhanced reactions, especially sorption enhanced hydrogenation reactions, and whereby the thermal moderator (7) is used for releasing heat to desorb an adsorbate, especially water, from the sorbent (6) during regeneration of the reactor (1).
